# EUROPÄISCHE PATENTANMELDUNG

(11) **EP 2 378 155 A2**
(43) Veröffentlichungstag der Anmeldung: **19.10.2011**
(21) Anmeldenummer: 11003187.9
(22) Anmeldetag: 15.04.2011
(51) Int. Cl.: F16F 13/14

(54) **Entkoppelte Hydrobuchse**

(30) Priorität: 19.04.2010 DE 102010015579
(71) Anmelder: Carl Freudenberg KG, 69469 Weinheim (DE)
(72) Erfinder: Beckmann, Wolfgang, 64289 Darmstadt (DE)

(57) **Zusammenfassung**

Entkoppelte Hydrobuchse (1) mit einem Kern (2) und einen Außenring (3), einer zwischen Kern (2) und Außenring (3) angeordneten Tragfeder (4), deren Stege (5, 6) mit ihren radial äußeren Endflächen (9, 10) am Außenring (3) anliegen, und mit zwei mit einer Flüssigkeit gefüllte Kammern (11, 12), die hydraulisch über mindestens einen Dämpfungskanal (13, 14) miteinander verbunden sind und von denen mindestens eine eine Arbeitskammer (11, 12) ist, sowie einer Einrichtung zur Isolierung hochfrequenter Schwingungen kleiner Amplituden, wobei die Stege (5, 6) der Tragfeder (4) in ihren der beziehungsweise den Arbeitskammem (11, 12) zugewandten Wandungen mit Ausnehmungen (16 bis 19) versehen sind, die durch weichelastische Membranen (20) von der beziehungsweise den Arbeitskammem (11,12) getrennt sind.

## Beschreibung

### Beschreibung

### Technisches Gebiet

Die Erfindung betrifft eine entkoppelte Hydrobuchse mit einem Kern und einem Außenring, einer zwischen Kern und Außenring angeordneten Tragfeder, deren Stege mit den radial äußeren Endflächen am Außenring anliegen, und mit zwei mit einer Flüssigkeit gefüllten Kammern, die hydraulisch über einen Dämpfungskanal miteinander verbunden sind und von denen mindestens eine eine Arbeitskammer ist, sowie eine Einrichtungr zur Isolierung hochfrequenter Schwingungen kleiner Amplituden.

### Stand der Technik

In der EP 0172 700 B2 ist eine Hydrobuchse der hier behandelten Art dargestellft. Die dort gezeigte Hydrobuchse enthält eine Arbeitskammer, die über einen Dämpfungskanal mit einer Ausgleichskammer verbunden ist. Die Tragfeder hat zwei Stege, die dachförmig angeordnet sind und mit ihren Enden am Kern beziehungsweise Außenring der Hydrobuchse anliegen. Zur Isolierung hochfrequenter Schwingungen kleiner Amplituden ist die Arbeitskammer mit einer Einrichtung verbunden, welche aus zwei Platten mit Düsen besteht und bei der zwischen den Platten eine flexible Membran gehalten ist. Diese Einrichtung sorgt dafür, dass bei kleinen Amplituden die Flüssigkeit nicht durch den Dämpfungskanal gepumpt wird. Die Schwingungen werden vielmehr durch die Membran gedämpft. Derart entkoppelte Hydrobuchsen haben sich bewährt. Im Hinblick auf ihre Konstruktion benötigen sie jedoch erheblichen Bauraum und auch Fertigungsaufwand.

In der DE 37 24 432 A1 wird eine andere Hydrobuchse gezeigt, bei der ebenfalls eine Isolierung hochfrequenter Schwingungen kleiner Amplituden vorgenommen wird, indem bei einer dort gezeigten Ausführungsform in der Nähe des Kerns zwei sich gegenüberliegende Ausnehmungen angebracht sind, die über dünne Membranwände von zwei Arbeitskammem getrennt sind. Diese Ausnehmungen sind einfach herzustellen und benötigen keine zusätzlichen Bauelemente. Ihre zum Kern parallel ausgerichtete Anordnung schmälert jedoch ihre Effektivität.

### Darstellung der Erfindung

Der Erfindung liegt die Aufgabe zugrunde, eine Hydrobuchse hoher Wirksamkeit zu erstellen, bei der auch eine sehr gute Isolierung hochfrequenter Schwingungen kleiner Amplituden mit einem möglichst geringen Aufwand erreichbar ist.

Die Lösung der gestellten Aufgabe wird mit den Merkmalen von Anspruch 1 erreicht. Die Unteransprüche 2 bis 19 stellen vorteilhafte Weiterbildungen des Erfindungsgedanken dar.

Durch die Anordnung der Ausnehmungen in den Stegwandungen wird eine besonders hohe Wirksamkeit des Isolierungsvorgangs erreicht. Zum einen können die Ausnehmungen in den Stegwandungen sich gegenüberliegend angeordnet und zum anderen in ihrer Gestalt gleich groß ausgeführt werden, Dieses hat zur Folge, dass unabhängig von der Stoßdchtung gleichgroße Isolierungen in beiden Stoßrichtungen erreicht werden.

Die Ausnehmungen können axial durch die Stege hindurchgeführt werden. Bevorzugt werden die Ausnehmungen jedoch In Form von Taschen axial von der Stirnseite her in die Stege eingebracht. Für die Gleichmäßigkeit des isolierungsvorgangs ist es hier günstig, wenn die Taschen axial von beiden Stirnseiten in die hlydrobuchse eingebracht werden und dabei in gleicher Größe und Länge ausgeführt sind. Vereinfacht ist es jedoch auch möglich, die Taschen axial von nur einer Stirnseite der Hydrobuchse in die Stege einzubringen.

Im Allgemeinen ist es vorteilhaft, wenn die Ausnehmungen mittig zwischen Kern und Außenring in den Stegwandungen angeordnet sind. Dieses ist dann besonders günstig, wenn die Stege eine gleichmäßige Stärke aufweisen.

Die Membranen werden materialeinheitlich mit der Tragfeder hergestellt. Die Elastizität der Membranen wird dadurch unterstützt, dass sie zusammen mit den Ausnehmungen leicht versenkt in die Wandungen der Stege eingebracht sind. Dabei können sie eine zu ihrer axialen Mitte hin abgestufte Form haben.

Die bevorzugte Ausführungsform der Hydrobuchse sieht vor, dass sie mit zwei Arbeitskammern versehen ist. Dabei ist es von Vorteil, wenn sie wenigstens einen Anschlagpuffer in der Hauptbelastungsrichtung hat. Bei dieser Ausführungsform hat die Tragfeder zwei Stege, die fluchtend zueinander in einer Ebene angeordnet sind. Die in den nachfolgenden Zeichnungen dargestellte Ausführungsform zeigt besonders gute Ergebnisse. Dadurch wird jedoch nicht ausgeschlossen, dass die Hydrobuchse mit einer Arbeitskammer und einer Ausgleichskammer ausgestaltet werden kann und dass beispielsweise die Tragfeder dachförmig ausgebildet wird.

Um einen guten Anschluss der Stege am Kern zu ermöglichen, ist es günstig, wenn der Kern eine eckige Außenkontur hat. Dabei werden die Anschlussflächen der Kerns und die Anschlussflächen der Stege vergleichbar groß ausgebildet.

### Kurzbeschreibung der Zeichnung

Anhand eines in der Zeichnung dargestellten Ausführungsbeispiels wird die Erfindung nachstehend näher erläutert.

Es zeigt
- Fig. 1: die Hydrobuchse in der Stirnansicht,
- Fig. 2: einen Längsschnitt durch die Hydrobuchse gemäß der Linie A-A der Fig. 1,
- Fig. 3: einen Querschnitt durch die Hydrobuchse gemäß der Linie C-C der Fig. 2 und
- Fig. 4: einen Längsschnitt durch Hydrobuchse gemäß der Linie B-B der Fig. 1.

### Ausführung der Erfindung

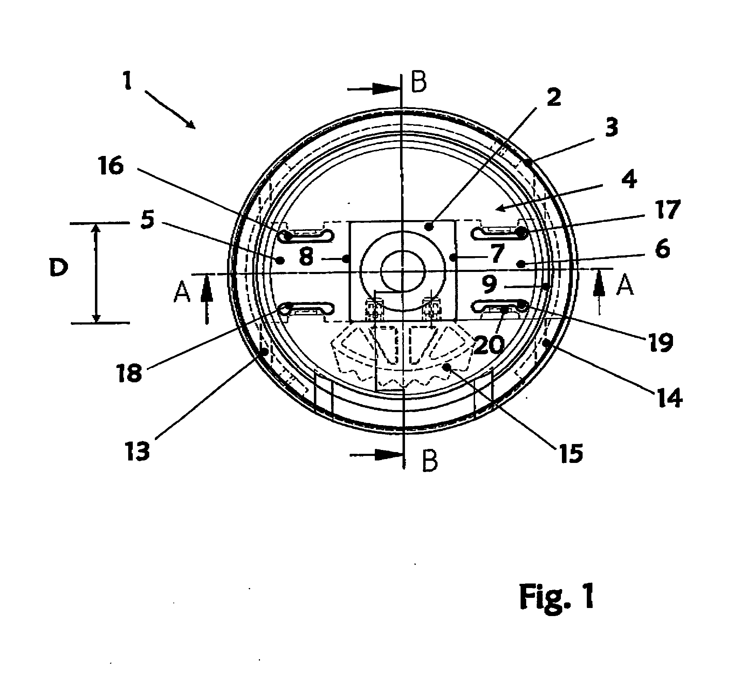

Die in der Fig. 1 gezeigte Hydrobuchse 1 besteht im Wesentlichen aus dem Kern 2, dem Außenring 3 und der zwischen dem Kern 2 und dem Außenring 3 angeordneten Tragfeder 4. Die Tragfeder 4 wird durch zwei Stege 5 und 6 gebildet, die mit ihren radial inneren Endflächen 7 und 8 am Kern 2 und ihren radial äußeren Endflächen 9 und 10 am Außenring 3 anliegen. Kern 2 und Stege 5 und 6 trennen die beiden Arbeitskammem 11 und 12, die mit einer Flüssigkeit gefüllt sind und die über in den Stirnwänden der Hydrobuchse angebrachte Dämpfungskanäle 13 und 14 hydraulisch miteinander verbunden sind. Um besonders große Ausschläge abzupuffern, ist ein Anschlagpuffer 15 vorgesehen. Bei der dargestellten Hydrobuchse 1 werden tieffrequente Schwingungen großer Amplituden über die Dämpfungskanäle 13, 14 gedämpft. Für die Isolierung hochfrequenter Schwingungen kleiner Amplituden sind in diesem Ausführungsbeispiel in den Stegen 5 und 6 der Tragfeder 4 die Ausnehmungen 16 bis 19 vorgesehen. Diese Ausnehmungen 16 bis 19 sind in den Stegwandungen untergebracht, welche den Arbeitskammern 11 und 12 zugewandt sind. Die Ausnehmungen 16 bis 19 sind durch die weichelastischen Membranen 20 von den Arbeitskammem 11 und 12 getrennt. Die Membranen 20 sind im vorliegenden Beispiel gleich stark ausgeführt. Die Ausnehmungen 16 bis 19 haben gleiche Größe und Gestalt und sind in axialer Richtung durch die Stege 5 und 6 hindurchgeführt. Jeweils zwei Ausnehmungen 5 und 6 sind sich gegenüberliegend in den Stegwandungen angeordnet. Die Stege 5 und 6 haben eine gleichmäßige Stärke D und sind fluchtend zueinander in einer Ebene angeordnet. Der Kern 2 hat eine rechteckige Außenkontur. Die Anschlussflächen 7 und 8 des Kerns 2 und die Anschlussflächen 9 und 10 der Stege haben eine vergleichbare Größe. Auch die Anschlussflächen 9 und 10 am Außenring haben eine vergleichbare Größe. Die Ausnehmungen 16 bis 19 sind etwa mittig zwischen Kern 2 und Außenring 3 in den Stegwandungen angeordnet. Die Membranen 20 der Ausnehmungen 16 bis 19 sind materialeinheitlich mit der Tragfeder 4 verbunden. Sie können folglich in einem Vulkanisationsprozess hergestellt werden. Um eine hohe Beständigkeit und auch Belastbarkeit der Membranen zu erreichen, sind die Membranen 20 in die Stegwandungen versenkt eingebracht. Dabei haben die Membranen 20 zu ihrer axialen Mitte hin eine abgestufte Form.

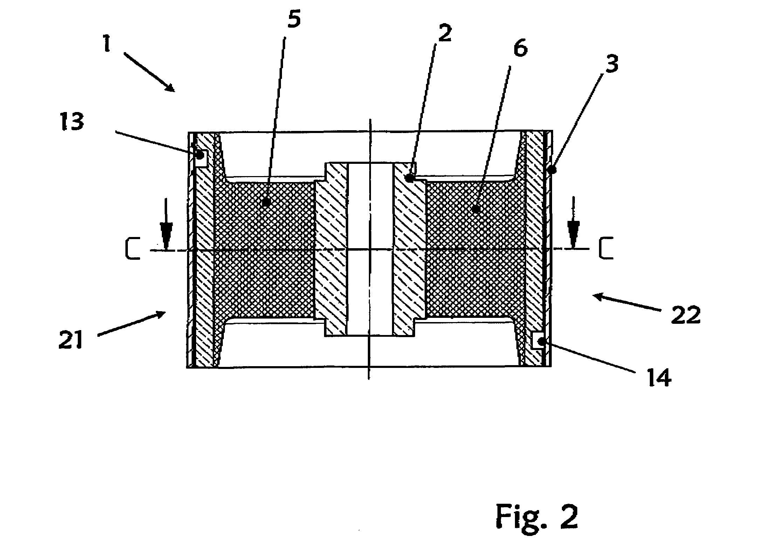

Die Fig. 2 zeigt einen Längsschnitt durch die Hydrobuchse 1 nach der Linie A-A der Fig. 1. Sichtbar ist hier die Form der Stege 5 und 6 in axialer Richtung, ebenso die Form der Stirnwände 21 und 22, welche die stirnseitigen Abschlüsse der Hydrobuchse 1 bilden, In den Stirnwänden 21 und 22 sind die Dämpfungskanäle 13 und 14 untergebracht.

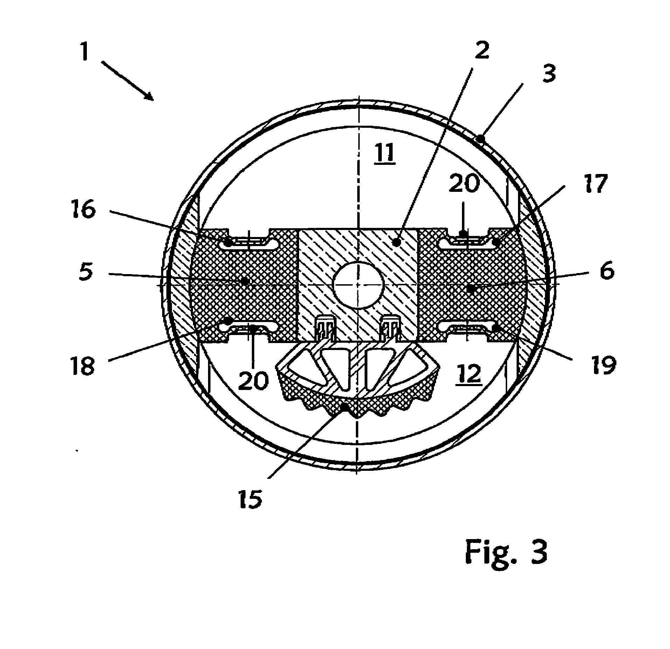

Die Fig. 3 zeigt einen Schnitt durch die Hydrobuchse 1 gemäß der Linie C-C der Fig. 2. Hier ist nochmals die versenkte Anordnung der Ausnehmungen 16 bis 19 mit den Membranen 20 gezeigt.

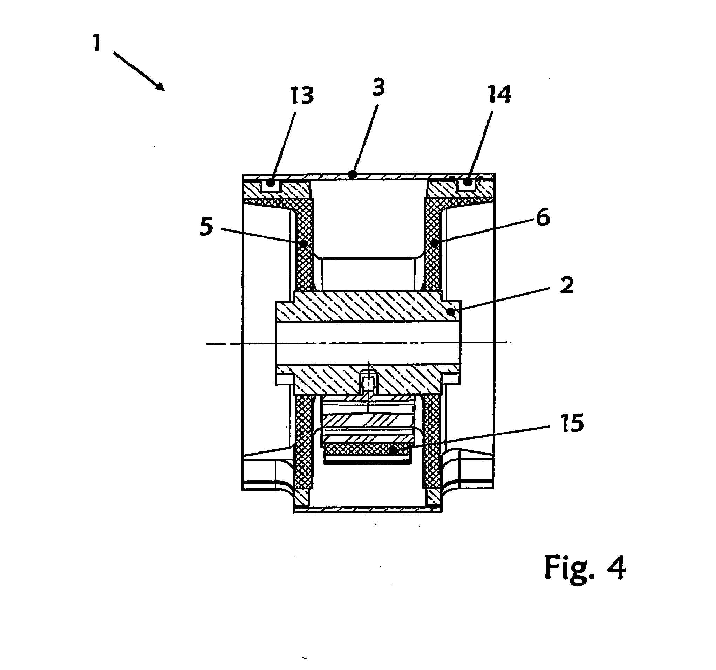

In der Fig. 4, welche einen Längsschnitt gemäß der Linie B-B aus der Fig. 1 ist, wurde nochmals die Anordnung der Dämpfungskanäle 13 und 14 sichtbar gemacht.

## Patentansprüche

1. Entkoppelte Hydrobuchse (1) mit einem Kern (2) und einen Außenring (3), einer zwischen Kern (2) und Außenring (3) angeordneten Tragfeder (4), deren Stege (5, 6) mit ihren radial äußeren Endflächen (9, 10) am Außenring (3) anliegen, und mit zwei mit einer Flüssigkeit gefüllte Kammern (11, 12), die hydraulisch über mindestens einen Dämpfungskanal (13,14) miteinander verbunden sind und von denen mindestens eine eine Arbeitskammer (11,12) ist, sowie einer Einrichtung zur Isolierung hochfrequenter Schwingungen kleiner Amplituden, **dadurch gekennzeichnet, dass** die Stege (5, 6) der Tragfeder (4) in ihren der beziehungsweise den Arbeitskammern (11, 12) zugewandten Wandungen mit Ausnehmungen (16 bis 19) versehen sind, die durch weichelasüsche Membranen (20) von der beziehungsweise den Arbeitskammem (11, 12) getrennt sind.

2. Entkoppelte Hydrobuchse nach Anspruch 1, **dadurch gekennzeichnet, dass** die Ausnehmungen (16 bis 19) die gleiche Größe und Gestalt haben.

3. Entkoppelte Hydrobuchse nach Anspruch 1 oder 2, **dadurch gekennzeichnet, dass** jeweils zwei Ausnehmungen (5, 6) in den Stegwandungen sich gegenüberliegend angeordnet sind.

4. Entkoppelte Hydrobuchse nach einem der Ansprüche 1 bis 3, **dadurch gekennzeichnet, dass** die Ausnehmungen (5, 6) axial in die Stege (5, 6) hindurchgeführt sind.

5. Entkoppelte Hydrobuchse nach einem der Ansprüche 1 bis 3, **dadurch gekennzeichnet, dass** die Ausnehmungen (5, 6) die Form von Taschen haben und axial von einer Stirnseite der Hydrobuchse (1) her in die Stege (5, 6) eingebracht sind.

6. Entkoppelt Hydrobuchse nach Anspruch 1, **dadurch gekennzeichnet, dass** die Ausnehmungen (96 bis 19) die Form von Taschen haben und axial von beiden Stirnseiten ( ) der Hydrobuchse (1) her in die Stege (5, 6) eingebracht sind.

7. Entkoppelte Hydrobuchse nach einem der Ansprüche 1 bis 6, **dadurch gekennzeichnet, dass** die Ausnehmungen (16 bis 19) mittig zwischen Kern (2) und Außenring (3) in den Stegen (5, 6) angeordnet sind.

8. Entkoppelte Hydrobuchse nach einem der Ansprüche 1 bis 7, **dadurch gekennzeichnet, dass** die Stege (5, 6) eine gleichmäßige Stärke (D) haben.

9. Entkoppelte Hydrobuchse nach einem der Ansprüche 1 bis 8, **dadurch gekennzeichnet, dass** die Membranen (20) materialeinheitlich mit der Tragfeder (4) verbunden sind.

10. Entkoppelte Hydrobuchse nach einem der Ansprüche 1 bis 9, **dadurch gekennzeichnet, dass** die Membranen (20) in die Wandung versenkt sind.

11. Entkoppelte Hydrobuchse nach einem der Ansprüche 1 bis 10, **dadurch gekennzeichnet, dass** die Membranen (20) zu ihrer axialen Mitte hin eine abgestufte Form haben.

12. Entkoppelte Hydrobuchse nach einem der Ansprüche 1 bis 11, **dadurch gekennzeichnet, dass** die Hydrobuchse (1) zwei Arbeitskammem (11, 12) hat.

13. Entkoppelte Hydrobuchse nach einem der Ansprüche 1 bis 3, **dadurch gekennzeichnet, dass** die Hydrobuchse (1) eine Arbeitskammer (11) und eine Ausgleichskammer hat.

14. Entkoppelte Hydrobuchse nach einem der Ansprüche 1 bis 13, **dadurch gekennzeichnet, dass** die Hydrobuchse (1) mit Anschlagpuffem (15) versehen ist.

15. Entkoppelte Hydrobuchse nach einem der Ansprüche 1 bis 14, **dadurch gekennzeichnet, dass** die Tragfeder (4) zwei Stege (5, 6) hat.

16. Entkoppelte Hydrobuchse nach einem der Ansprüche 1 bis 15, **dadurch gekennzeichnet, dass** die Stege (5,6) der Tragfeder (4) dachförmig ausgebildet sind.

17. Entkoppelte Hydrobuchse nach einem der Ansprüche 1 bis 16, **dadurch gekennzeichnet, dass** die Stege (5, 6) der Tragfeder (4) fluchtend zueinander in einer Ebene angeordnet sind.

18. Entkoppelte Hydrobuchse nach einem der Ansprüche 1 bis 17, **dadurch gekennzeichnet, dass** der Kern (2) in axialer Richtung eine rechteckige Außenkontur hat.

19. Entkoppelte Hydrobuchse nach einem der Ansprüche 1 bis 18, **dadurch gekennzeichnet, dass** die Anschlussflächen (7, 8) des Kerns (2) und die Anschlussflächen (9, 10) der Stege (5, 6) vergleichbar groß sind,
